# EUROPÄISCHE PATENTANMELDUNG

(11) **EP 1 731 399 A2**
(43) Veröffentlichungstag der Anmeldung: **13.12.2006**
(21) Anmeldenummer: 06008473.8
(22) Anmeldetag: 25.04.2006
(51) Int. Cl.: B62B 5/02

(54) **Transportvorrichtung mit motorisch angetriebener Treppensteigvorrichtung**

(30) Priorität: 08.06.2005 DE 102005026337
(71) Anmelder: AAT Alber Antriebstechnik GmbH, 72458 Albstadt (DE)
(72) Erfinder: Alber, Markus, 72458 Albstadt (DE)
(74) Vertreter: Kohler Schmid Möbus

(57) **Zusammenfassung**

Eine Transportvorrichtung mit an einem Gestell 12 angeordneten Laufrädern und einer elektromotorisch angetriebenen Treppensteigvorrichtung 14 weist in der Treppensteigvorrichtung 14 mindestens ein teleskopierbares Steigbein 16 aus mindestens zwei Teleskopteilen 18, 20 auf. Das erste Teleskopteil 18 ist in einem Endbereich schwenkbar am Gestell 12 in einer ortsfesten Aufnahme 30 angelenkt, und das zweite Teleskopteil 20 ist über einen elektromotorisch um eine Achse drehbar angetriebenen Exzenterhebel in das erste Teleskopteil 18 ein- und ausfahrbar. Das teleskopierbare Steigbein 16 kann in einem anderen Ausführungsbeispiel auch einstückig ausgebildet sein.

## Beschreibung

Die Erfindung betrifft eine Transportvorrichtung mit einer motorisch angetriebenen Treppensteigvorrichtung.

Eine derartige Transportvorrichtung mit motorisch angetriebener Treppensteigvorrichtung ist aus EP 0 903 278 A2 bekannt geworden.

Die bekannte Transportvorrichtung weist an einem Gestell Laufräder und eine elektromotorisch angetriebene Treppensteigvorrichtung auf, wobei der Elektromotor der Treppensteigvorrichtung erste Exzenterhebel antreibt, an denen jeweils zweite Exzenterhebel drehbar gelagert sind, die mit ihren Enden an Trägern mit an ihrem unteren Ende angeordneten Stützfüßen drehbar gelagert sind, und wobei die Träger linear an der Vorrichtung geführt sind und zwischen den ersten und zweiten Exzenterhebeln Getriebe mit einem Übersetzungsverhältnis von 1 : 2 angeordnet sind.

Aufgabe der Erfindung ist es, eine Treppensteigvorrichtung einer Transportvorrichtung zu vereinfachen, damit sie kostengünstiger und leichter im Gesamtgewicht hergestellt werden kann.

Erfindungsgemäß wird die Aufgabe durch eine Transportvorrichtung mit an einem Gestell angeordneten Laufrädern und einer elektromotorisch angetriebenen Steigvorrichtung dadurch gelöst, dass die Treppensteigvorrichtung entweder mindestens ein teleskopierbares Steigbein aus mindestens zwei Teleskopteilen aufweist, wobei das erste Teleskopteil in einem Endbereich schwenkbar am Gestell in einer ortsfesten Aufnahme angelenkt ist und das zweite Teleskopteil über einen elektromotorisch um eine Achse drehbar angetriebenen Exzenterhebel in das erste Teleskopteil ein- und ausfahrbar ist, oder mindestens ein einstückiges Steigbein vorgesehen ist, das in einem Endbereich schwenkbar am Gestell in einer ortsfesten Aufnahme angelenkt und in Achsrichtung des Steigbeins mit Hilfe eines motorisch um eine Achse drehbar angetriebenen Exzenterhebels geführt verschiebbar ist.

Die erfindungsgemäße Vorrichtung hat somit den wesentlichen Vorteil, dass sich das teleskopierbare Steigbein einfachst, dauerhaft und belastungsstabil am Gestell befestigen lässt. Wird auf ein Getriebe zum Antrieb des Steigbeins verzichtet, so kann die erfindungsgemäße Vorrichtung auch besonders leicht im Gewicht ausgestaltet werden. Über die Ausfahrlänge des teleskopierbaren Steigbeins lässt sich die Vorrichtung ohne wesentliche Konstruktionsänderungen an unterschiedlichste Treppenstufenhöhen und - tiefen anpassen. Wird nur die Treppensteigvorrichtung elektromotorisch angetrieben, so sind auch im Vergleich zu bekannten Konstruktionen aus dem Stand der Technik geringere Antriebskräfte ausreichend. Über die Ausgestaltung des mindestens einen Steigbeins als Teleskop lässt sich die Vorrichtung auch aus weniger Einzelteilen aufbauen, und die Bewegungsabläufe sowohl beim Treppenaufsteigen als auch beim Treppenabsteigen lassen sich vereinfachen. Ferner ist eine besonders kompakte Bauweise möglich.

Die erfindungsgemäße Transportvorrichtung eignet sich zum Transport von beliebigen Lasten und ist besonders für gehbehinderte Personen geeignet, die mit der erfindungsgemäßen Transportvorrichtung Treppen auf- wie auch absteigen können.

In besonders vorteilhafter Ausgestaltung der Erfindung ist der Exzenterhebel einenends in der Achse der Laufräder drehbar gelagert und anderenends am zweiten Teleskopteil oder am einstückigen Steigbein drehbar angelenkt.

Dies hat den Vorteil, dass man eine für die Laufräder schon vorgesehene Achse auch zur Lagerung des Exzenterhebels nutzen kann, der in seiner Umdrehung um die Laufradachse den Teleskophub des Steigbeins bestimmt. Der Exzenterhebel umläuft elektromotorisch angetrieben die Achse und verkürzt bzw. verlängert dabei das als Teleskop aufgebaute Steigbein.

Der erste Teleskopteil ist in der Regel als Rohr ausgebildet, in dem ein weiteres Rohr bzw. eine Stange, die als zweites Teleskopteil ausgebildet ist, geführt ist.

In weiterer Ausgestaltung der Erfindung ist der Exzenterhebel so bemessen, dass er in radialer Richtung nicht über die Laufräder vorsteht. Dies hat den Vorteil, dass der Exzenterhebel bei seinem Umlauf um die Achse durch das Laufrad bzw. die Laufräder geschützt ist und keine zusätzlichen konstruktiven Maßnahmen ergriffen werden müssen, um den störungsfreien Ablauf eines Exzenterhebels um seine Drehachse zu gewährleisten.

In einer anderen Ausgestaltung der Erfindung ist das mindestens eine Steigbein unabhängig von den Laufrädern am Gestell angeordnet. Dies hat den Vorteil, dass man bei der konstruktiven Ausgestaltung des Steigbeins und seiner Anlenkung am Gestell konstruktive Vorgaben, die durch die Laufräder bestimmt sind, nicht berücksichtigen muss. Zahlreiche erweiterte Konstruktionsmöglichkeiten für die Umsetzung eines erfindungsgemäßen Treppensteigvorrichtung sind dadurch gegeben.

Sind in einer weiteren Ausgestaltung der Erfindung zwei Steigbeine vorgesehen, so erhöht dies die Sicherheit, und sowohl bei einem Treppenaufsteig- wie auch bei einem Treppenabsteigvorgang ergibt sich eine erhöhte Kippsicherheit.

Ist in einer weiteren Ausgestaltung der Erfindung das zweite Teleskopteil oder das einstückige Steigbein im Anschluss an die Anlenkung an den Exzenterhebel in Richtung zum freien Ende hin abgewinkelt, so wird das Treppenauf- wie auch -absteigen mit der erfindungsgemäßen Treppensteigvorrichtung für die damit verbundene Transportvorrichtung erleichtert. Einzelne Treppenstufen lassen sich dadurch einfacher überwinden, und die handgeführte Transportvorrichtung lässt sich leichter auf die auf- bzw. absteigende Trittstufe einer Treppe einschwenken.

Bevorzugt ist am freien Ende des mindestens einen Steigbeins ein Fuß vorgesehen, mit der Treppenkanten druckschonend und erleichtert im Ablauf überwunden werden können.

Die erfindungsgemäße Transportvorrichtung ist in einem Ausführungsbeispiel in den nachfolgenden Figuren dargestellt. Die Figuren zeigen den erfindungsgemäßen Gegenstand stark vereinfacht, damit der erfindungsgemäße konstruktive Aufbau verbessert gezeigt werden kann.

Es zeigt:
- Fig. 1: eine schematisierte Seitenansicht der erfindungsgemäßen Transportvorrichtung in einer Anfahrposition mit an einer Treppenstufe anliegenden Laufrädern;
- Fig. 2: eine Position des mindestens einen Steigbeins im Augenblick seines Aufsetzens auf eine Trittstufe;
- Fig. 3: eine schematisierte Seitenansicht der erfindungsgemäßen Transportvorrichtung während eines Treppenaufsteigvorgangs;
- Fig. 4: die erfindungsgemäße Treppensteigvorrichtung mit einem nahezu voll ausgefahrenen Teleskop-Steigbein;
- Fig. 5: die erfindungsgemäße Transportvorrichtung mit der elektromotorisch angetriebenen Treppensteigvorrichtung in Seitenansicht kurz vor dem Aufsetzen auf die nächsthöher gelegene Treppenstufe;
- Fig. 6: die schematisierte Seitenansicht der erfindungsgemäßen Transportvorrichtung nach dem Aufsetzen auf der nächsthöher gelegenen Treppenstufe und während des Nachziehens des mindestens einen Steigbeins; und
- Fig. 7: eine Seitenansicht der erfindungsgemäßen Transportvorrichtung in Ruheposition auf der nächsthöher gelegenen Treppenstufe.

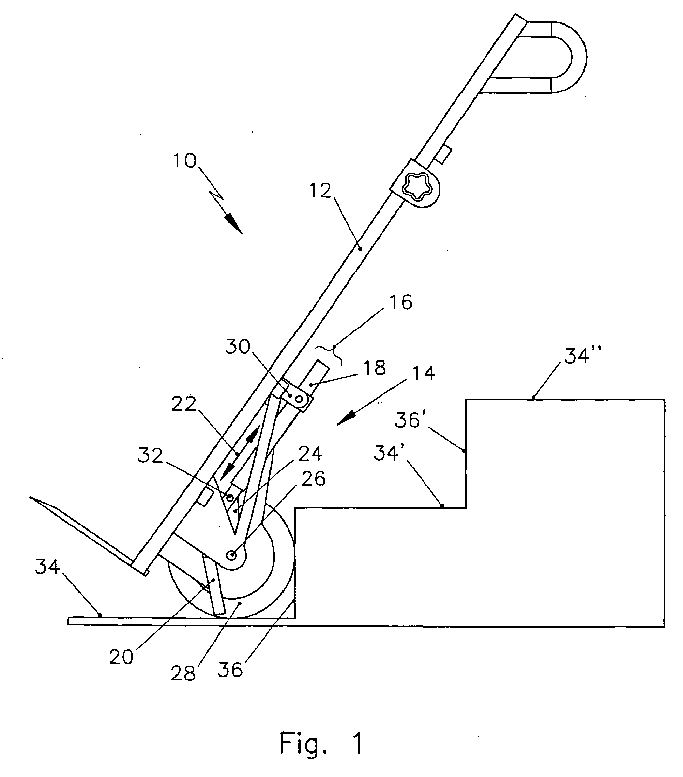

Fig. 1 zeigt mit 10 die erfindungsgemäße Transportvorrichtung in einer Seitenansicht mit einem Gestell 12, an dem eine Treppensteigvorrichtung 14 befestigt ist. Die Treppensteigvorrichtung 14 weist ein Steigbein 16 auf, das sich aus einem ersten Teleskopteil 18 und aus einem zweiten Teleskopteil 20 zusammensetzt. Das zweite Teleskopteil 20 ist in Pfeilrichtung 22 im ersten Teleskopteil 18 verfahrbar geführt angeordnet.

Das zweite Teleskopteil 20 ist über einen Exzenterhebel 24, an dem das zweite Teleskopteil 20 drehbar angelenkt ist, mit einer Achse 26 verbunden, um die der Exzenterhebel 24 elektromotorisch angetrieben drehbar ist. Die Achse 26 fällt im Ausführungsbeispiel mit einer Achse zusammen, auf der die Laufräder 28 drehbar gelagert befestigt sind.

Das erste Teleskopteil 18 ist über eine ortsfeste Aufnahme am Gestell 12 mit dem Gestell 12 gelenkig verbunden. Über eine Anlenkung 32 ist das zweite Teleskopteil 20 mit dem Exzenterhebel 24 verbunden.

Die Transportvorrichtung 10 befindet sich auf einer Trittstufe 34 einer Treppe, die auch Trittstufen 34' und 34" aufweist. Zwischen zwei Trittstufen 34, 34' ist eine Setzstufe 36 ausgebildet und zwischen der Trittstufe 34', 34" ist die Setzstufe 36' ausgebildet.

In der in der Fig. 1 gezeigten Stellung liegt die Treppensteigvorrichtung 14 über die Laufräder 28 sowohl an der Trittstufe 34 wie an der Setzstufe 36 an. Wird nun der elektromotorische Antrieb der Treppensteigvorrichtung 14 angeschaltet, so dreht sich der Exzenterhebel 24 im Uhrzeigersinn und verschiebt bzw. bewegt das mindestens eine Steigbein 16 für eine Aufwärtsbewegung.

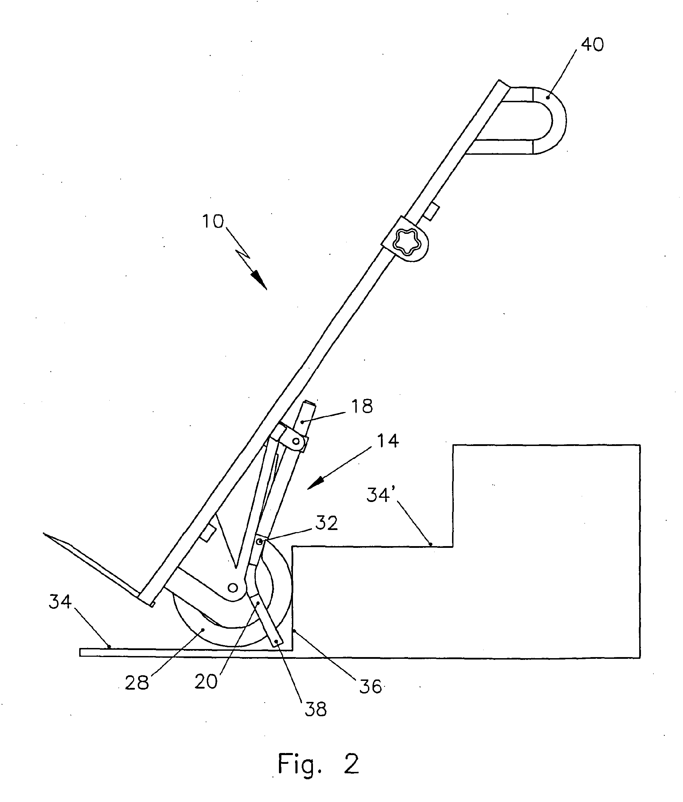

In Fig. 2 ist die erfindungsgemäße Transportvorrichtung 10 in einer Seitenansicht und in einer Stellung gezeigt, in der sich der Exzenterhebel 24 im Uhrzeigersinn so weit gedreht hat, dass ein freies Ende des zweiten Teleskopteils 20 auf der Oberfläche der Trittstufe 34 aufsetzt. Die Transportvorrichtung 10 selbst wird von einer Bedienungsperson über einen Handlauf 24 nicht nur gehalten, sondern auch bezüglich des Schwerpunkts der Transportvorrichtung 10 ausbalanciert. Über den Handlauf 40 kann die Transportvorrichtung 10 senkrechter gestellt oder zu den Treppenstufen hin verschwenkt werden, und es ist auch möglich, die Transportvorrichtung 10 mittels des Handlaufs 40 in horizontaler Richtung mittels der Laufräder 28 zu verschieben. Mit der Treppensteigvorrichtung 14 soll die gesamte Transportvorrichtung 10 von der Trittstufe 34 auf die Trittstufe 34' angehoben werden. Dazu wird der elektromotorische Antrieb der Treppensteigvorrichtung 14 weiter aktiviert.

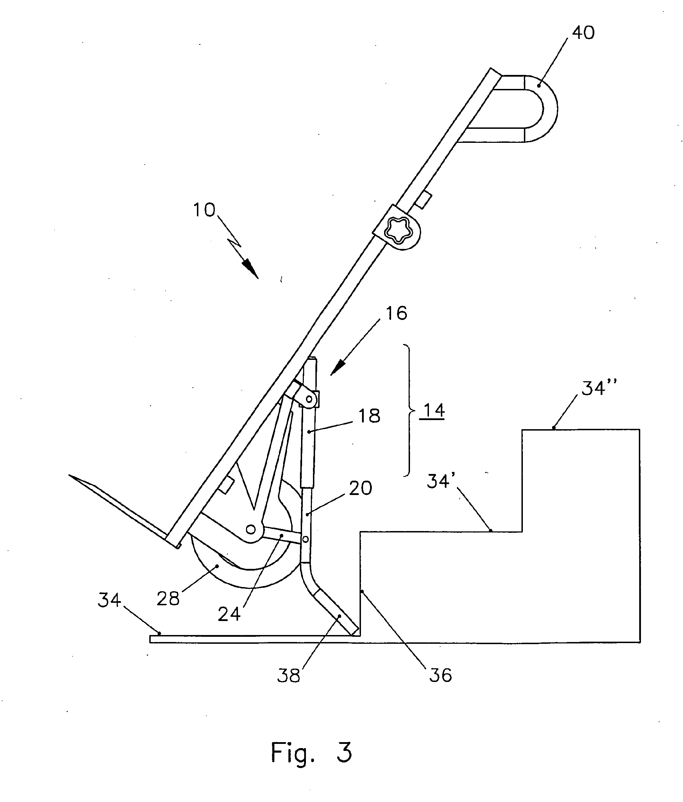

In Fig. 3 ist gezeigt, wie die Treppensteigvorrichtung 14, weiter im Uhrzeigersinn betrieben, die Transportvorrichtung 10 anhebt. Der Exzenterhebel 24 fährt das zweite Teleskopteil 20 aus dem ersten Teleskopteil 18 derart weit aus, dass abgestützt über das freie Ende 38 des zweiten Teleskopteils 20 auf der Oberfläche der Trittstufe 34 die gesamte Transportvorrichtung 10 über die Oberfläche der Trittstufe 34 angehoben wird.

Die Bedienungsperson hält dabei die Transportvorrichtung 10 am Handlauf 40 und achtet darauf, dass die Schwerkraftkomponente möglichst auf das Steigbein 16 wirkt.

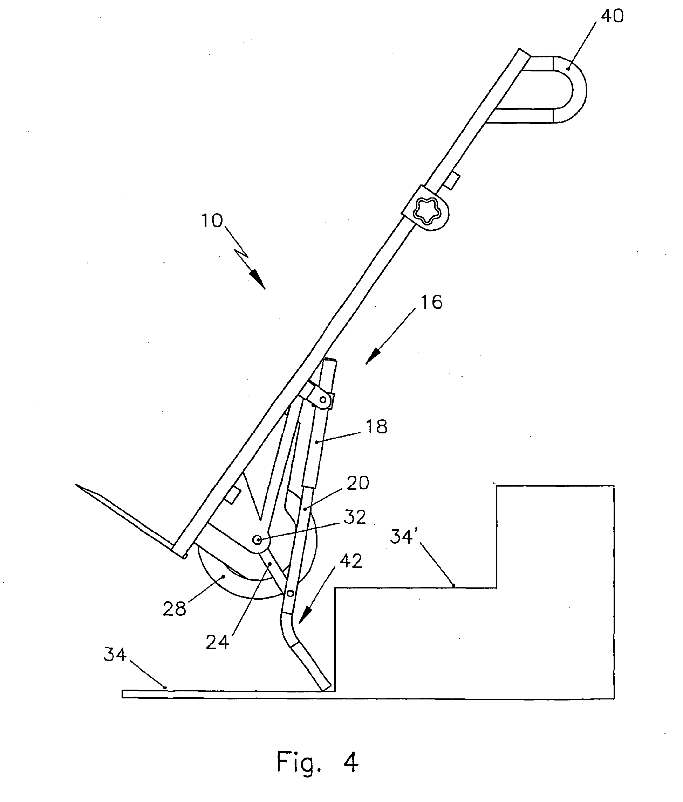

Fig. 4 zeigt die Transportvorrichtung 10 in einer Seitenansicht mit einem nahezu vollkommen ausgefahrenen zweiten Teleskopteil 20 gegenüber dem ersten Teleskopteil 18. Dabei wurde der Exzenterhebel 24 weiter elektromotorisch im Uhrzeigersinn gedreht, und bei ortsfester Anordnung des ersten Teleskopteils 18 wurde das zweite Teleskopteil 20 weiter aus dem ersten Teleskopteil 18 herausgefahren. Bei den in den Figuren gezeigten Bewegungsvorgängen ist das Steigbein 16 sowohl im Bereich des ersten Teleskopteils 18 wie auch im Bereich des zweiten Teleskopteils 20 gelenkig bzw. verschwenkbar drehbar an der Transportvorrichtung 10 befestigt. Das zweite Teleskopteil 20 ist im unteren Bereich unterhalb der Anlenkung 32 mit einer Abwinklung 42 versehen, die eine Verschwenkung der gesamten Transportvorrichtung 10 zur Trittstufe 34' hin erleichtert, ohne dass dabei die Transportvorrichtung mit einer Treppenstufe kollidiert.

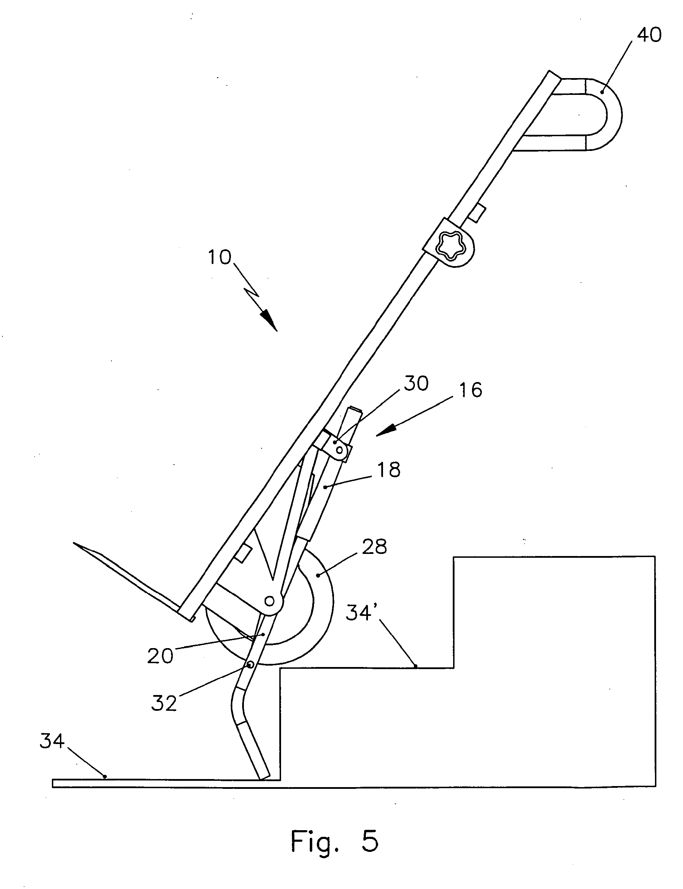

Fig. 5 zeigt die Transportvorrichtung 10 erneut in einer Seitenansicht, wie sie über den Handlauf 40 auf die Trittstufe 34' hin verschwenkt wird. Das Laufrad 28 befindet sich dabei über der Oberfläche der Trittstufe 34'.

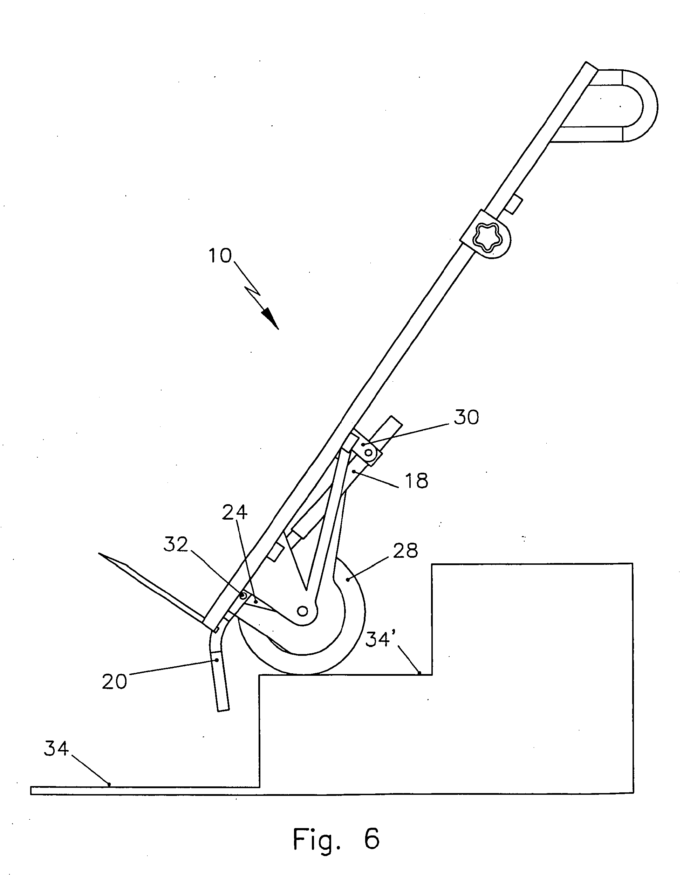

Fig. 6 zeigt die Transportvorrichtung 10 in einer Stellung, in der das Laufrad 28 bzw. die Laufräder 28 schon auf der Trittstufe 34' aufliegen. Die Teleskopteile 18, 20 des Steigbeins wurden weiter elektromotorisch über den Exzenterhebel 24 im Uhrzeigersinn gedreht, und das freie Ende des Steigbeins mit dem zweiten Teleskopteil 20 weist keine Bodenberührung auf. Das zweite Teleskopteil 20 wird noch weiter im Uhrzeigersinn durch den Exzenterhebel 24 verdreht, sodass auch das freie Ende des zweiten Teleskopteils 20 über der Trittstufe 34' liegt.

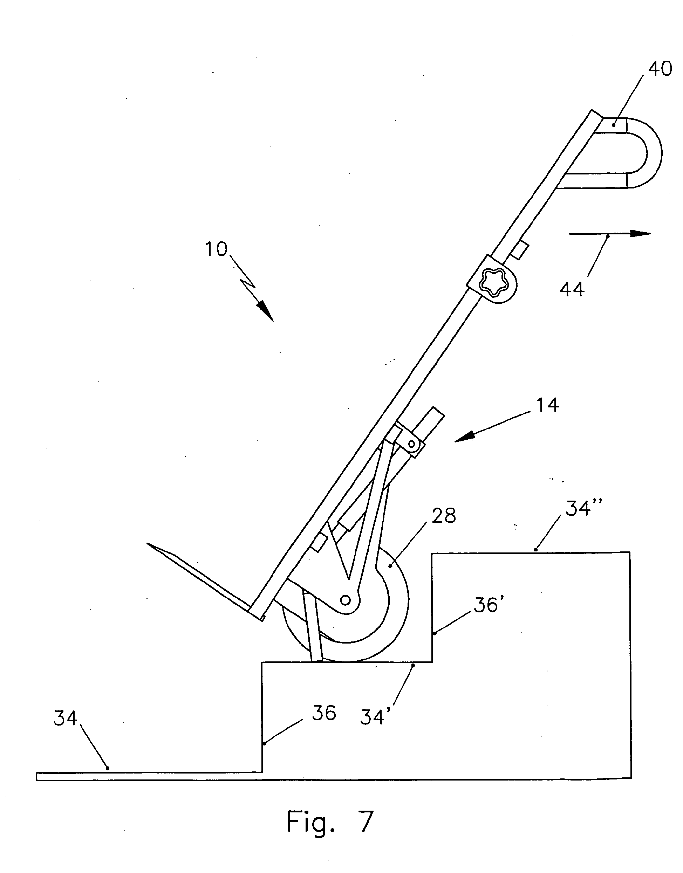

Fig. 7 zeigt eine Position der Transportvorrichtung 10 in Seitenansicht auf der Trittstufe 34', in der das Steigbein noch weiter über den elektromotorischen Antrieb im Uhrzeigersinn gedreht wurde, und die gesamte Transportvorrichtung 10 wurde über den Handlauf 40 in Pfeilrichtung 44 verschoben. Soll nun die Transportvorrichtung 10 von der Trittstufe 34 auf die Trittstufe 34" angehoben werden, so wird die Treppensteigvorrichtung 14 erneut aktiviert, und der Exzenterhebel 24 dreht sich im Uhrzeigersinn um die zentrisch gelagerte Achse. Soll ein Absteigevorgang eingeleitet werden, so wird die Drehrichtung des elektromotorischen Antriebs geändert, und der Exzenterhebel dreht sich gegen den Uhrzeigersinn um eine Achse.

Eine Transportvorrichtung mit an einem Gestell 12 angeordneten Laufrädern und einer elektromotorisch angetriebenen Treppensteigvorrichtung 14 weist in der Treppensteigvorrichtung 14 mindestens ein teleskopierbares Steigbein 16 aus mindestens zwei Teleskopteilen 18, 20 auf. Das erste Teleskopteil 18 ist in einem Endbereich schwenkbar am Gestell 12 in einer ortsfesten Aufnahme 30 angelenkt, und das zweite Teleskopteil 20 ist über einen elektromotorisch um eine Achse drehbar angetriebenen Exzenterhebel in das erste Teleskopteil 18 ein- und ausfahrbar. Das teleskopierbare Steigbein 16 kann in einem anderen Ausführungsbeispiel auch einstückig ausgebildet sein.

Wird das Steigbein einstückig ausgebildet, so ist das einstückige Steigbein in der ortsfesten Aufnahme 30 nicht nur gelenkig gelagert, sondern auch in der Aufnahme 30 geführt verschiebbar. Beispielsweise ist die Aufnahme 30 dann als Öse ausgebildet, in der das einstückige Steigbein geführt verschoben werden kann, wenn sich der Exzenterhebel 24 dreht. Der Exzenterhebel 24 ist mit dem einstückigen Steigbein gelenkig verbunden.

## Patentansprüche

1. Transportvorrichtung mit an einem Gestell (12) angeordneten Laufrädern (28) und einer elektromotorisch angetriebenen Treppensteigvorrichtung (14), wobei die Treppensteigvorrichtung (14) entweder mindestens ein teleskopierbares Steigbein (16) aus mindestens zwei Teleskopteilen (18, 20) aufweist, wobei das erste Teleskopteil (18) in einem Endbereich schwenkbar am Gestell (12) in einer ortsfesten Aufnahme (30) angelenkt ist und das zweite Teleskopteil (20) über einen motorisch um eine Achse drehbar angetriebenen Exzenterhebel (24) in das erste Teleskopteil ein- und ausfahrbar ist, oder mindestens ein einstückiges Steigbein vorgesehen ist, das in einem Endbereich schwenkbar am Gestell (12) in einer ortsfesten Aufnahme (30) angelenkt und in Achsrichtung des Steigbeins mit Hilfe eines motorisch um eine Achse drehbar angetriebenen Exzenterhebels geführt verschiebbar ist.

2. Transportvorrichtung nach Anspruch 1, **dadurch gekennzeichnet, dass** der Exzenterhebel (24) einenends in der Achse (26) der Laufräder (28) drehbar gelagert ist und anderenends am zweiten Teleskopteil (20) oder am einstückigen Steigbein drehbar angelenkt ist.

3. Transportvorrichtung nach Anspruch 1 oder 2, **dadurch gekennzeichnet, dass** der Exzenterhebel (24) so bemessen ist, dass er in radialer Richtung nicht über die Laufräder (28) vorsteht.

4. Transportvorrichtung nach Anspruch 1, **dadurch gekennzeichnet, dass** das mindestens eine Steigbein (16) unabhängig von den Laufrädern (28) am Gestell (12) angeordnet ist.

5. Transportvorrichtung nach einem der Ansprüche 1 bis 4, **dadurch gekennzeichnet, dass** zwei Steigbeine (16) vorgesehen sind.

6. Transportvorrichtung nach einem der Ansprüche 1 bis 5, **dadurch gekennzeichnet, dass** das zweite Teleskopteil (20) oder das einstückige Steigbein im Anschluss an die Anlenkung (32) an den Exzenterhebel (24) in Richtung zum freien Ende (38) hin abgewinkelt ist.
